# EUROPEAN PATENT APPLICATION

(11) **EP 4 488 953 A1**
(43) Date of publication of application: **08.01.2025**
(21) Application number: 23184313.7
(22) Date of filing: 07.07.2023
(51) Int. Cl.: G06V 10/141, G03B 15/03, G06V 10/143, G06V 10/98, G06V 20/59, H04N 23/74

(54) **A METHOD TO ASSESS THE EYE SAFETY CONDITION OF A SYSTEM, AN ASSOCIATED SYSTEM AND A DRIVER MONITORING SYSTEM**

(71) Applicant: Valeo Comfort and Driving Assistance, 94000 Créteil (FR)
(72) Inventor: TAMAM, Mahmoud, 94000 Créteil (FR)
(74) Representative: Delplanque, Arnaud

(57) **Abstract**

A method to assess the eye safety condition of a system (2) comprising an illumination device (22), a light diffusor (26), and an image sensor (20) wherein the light diffusor is placed in the optical path of the illumination device to spread the emitted light across a target area (3) at least partially included in the field of view of the image sensor, includes:
- Capturing a first image of the target area using the image sensor while the illumination device is on.
- Capturing a second image of the target area using the image sensor while the illumination device has been turned off.
- Generating a third image by computing the intensity difference between the first and second images.
- Checking if the light diffusor effectively spreads the light emitted by the illumination device across the whole target area by processing the third image.

A corresponding system and a driver monitoring system is also described.

## Description

### FIELD OF THE INVENTION

The present disclosure relates to a system which contains both an illumination device and an image sensor.

In particular, the present disclosure relates but is not limited to a method to assess the eye safety condition of system as described above, to an associated system and to a driver monitoring system.

### TECHNICAL BACKGROUND

Driver Monitoring Systems (DMS) are used in vehicles equipped with driver-assistance system to oversee the driver's behavior. Using sensing devices placed in front of the driver, facial expressions and/or head position are monitored. Lack of attention or drowsiness from the driver may be detected by the DMS and an alarm may be triggered when necessary, thus reducing the risk of traffic accidents. Such sensing devices may rely on either bidimensional data such as images and videos or tridimensional data, using time-of-flight methods to gather tridimensional information inside the cabin of the vehicle.

Such sensing devices may include an illumination device meant to illuminate a target area inside the cabin of the vehicle, usually around the driver's face and upper torso region.

The illumination devices chosen for this type of application commonly use infrared light sources, with wavelength not perceptible to the human eye, to avoid distracting the driver.

However, in some situations, the infrared illumination device may rise concerns about the driver's eye safety, if the illuminance value gets too high for instance, because the infrared light source would not trigger the pupillary light reflex of the driver.

Infrared light sources used in illumination devices for DMS applications, may be laser sources, like Vertical-cavity surface-emitting laser, or VCSEL, due to their reliability and cost-effectiveness.

The infrared light beam generated by a VCSEL is emitted with a narrow irradiation angle. Thus, the system also includes a light diffusor, which is added to the beam path to widen the irradiation angle, in order to homogenously spread the illumination across the target area which usually corresponds to the driver's face and upper torso region. Thus, the illumination intensity before the light diffusor is high, in order to guarantee enough irradiance onto the target area after passing through the light diffusor.

Eye safety concerns for the driver arise when the light diffusor is impaired or dislodged, as light intensity is then localized in a small area with an irradiance value that may now exceed the recommended eye safety threshold.

Solutions against such concerns may consist of strong mechanic fixature of the light diffusor, and/or detection devices which ensure that the light diffusor is not dislodged, in order to cut-off the illumination device in case of threat for the driver's eye safety.

Nonetheless, these solutions are inefficient against some types of impairment, for instance, when the light diffusor is damaged after heat exposure thus altering its internal structure and its light diffusion property, without changing its outer structure.

Therefore, there is a need for a reliable and robust method to check the integrity of the light diffusor in order to assess whether the illumination system operates in eye safety conditions for the driver.

### SUMMARY OF THE INVENTION

In this context, the invention provides a method to assess the eye safety condition of a system comprised of an illumination device, a light diffusor and an image sensor, wherein the light diffusor is placed in the optical path of the illumination device to spread light emitted by said illumination device across a target area at least partially included in the field of view of the image sensor, and characterized by the following steps:
- Capturing a first image of the target area using the image sensor while the illumination device is on,
- Capturing a second image of the target area using the image sensor while the illumination device is off,
- Generating a third image by computing the intensity difference between the first and second images,
- Checking if the light diffusor effectively spreads the light emitted by the illumination device across the whole target area by processing the third image.

Use of such a method allows a simple and reliable assessment of the eye-safety condition of the system, without involving elements outside of the system. Impairments of any sorts, even those due to alteration of the physical properties of the light diffusor can be detected, simply by using image processing method.

In addition, capturing two images, one with the illumination device on, one with the illumination device off, then generating a third image based on the intensity difference between the two images, improve the accuracy of the assessment, by getting rid of unwanted parasitic light coming from the surrounding environment.

The assessment of the eye safety condition may in particular be done by checking whether the light diffusor has been impaired or dislodged. In this case, instead of a homogenous illumination across the whole target area, only a central region is illuminated by the illumination device. This localized spot would be illuminated with a high intensity value compared to the rest of the target area. In this case, the illumination would not be deemed homogenous across the whole target area anymore.

Hence, checking if the light diffusor effectively spread the light emitted by the illumination device across the whole target area may for instance be done by evaluating the homogeneity of the illumination intensity across the target area on the third image, where the parasitic light coming from the surrounding environment has been removed.

In some embodiment, such as described below, to evaluate whether the illumination is homogenous across the whole target area can be done by comparing the intensity information from the border of the target area to the intensity around the localized spot on the generated third image.

In particular, in some embodiments, one may rely on a specific algorithm to perform the aforementioned intensity comparison. This algorithm includes the following steps:
- Defining several sub-areas on the generated third image. These sub-areas are chosen accordingly to the field of view of image sensor and the elements it contains.
- Hence, each sub-areas receives a label, according to their position on the image sensor field of view. For instance, some sub-areas are labelled center of the target area, while others belong to the border of the target area and are labelled as such.
- Computing an intensity value for each label, by considering all sub-areas contained in said label. This intensity value can either be obtained by averaging the intensity value across all pixels of all sub-areas for a given label, or by finding the maximum intensity value between all pixels of all sub-areas.
- Comparing the intensity difference value to a threshold.

Once checking if the light diffusor is damaged or missing has been done, an eye safety condition assessment can be done for the system, as when the light diffusor is not properly spreading the light emitted by the illumination device, the system does not operate in eye safety condition anymore.

In addition, the method can include a step wherein if the system does not satisfy the eye safety condition, the intensity of the illumination device is adjusted. This can either mean lowering the illumination device intensity, or simply switching it off.

Furthermore, at the end of the described method, if the system does satisfy the eye safety condition, the whole method can be repeated, step by step, each repetition going through all the steps described above.

In some embodiment, it is also possible to modify the exposure time value between repetition of the method. For instance, a first exposure time value can be used on the image sensor when capturing both the first image and second image, and then a second exposure time value, distinct from the first exposure time value, can be used when capturing both the first image and second image in a new repetition of the method.

For instance, the exposure time could be changed between repetitions to perform eye safety assessment for multiple range of distances between the illumination device and the target area.

The invention also describes a system able to perform its own eye-safety condition assessment. The system includes an illumination device, for which the assessment is done, an image sensor, a light diffusor without which the system would not operate in eye safety conditions anymore, and a control unit. This control unit is configured to perform a set of tasks, including:
- Toggling the illumination device on and off between each capture of the image sensor,
- Triggering the acquisitions on the image sensor to capture a first image once the illumination device has been turned on, and to capture a second image once the illumination device has been turned off,
- Computing a third image based on the intensity difference between the first image and the second image,
- Checking the integrity of the light diffusor, by processing the third image.

The control unit is also configured to run iterations of the set of tasks.

In addition, the control unit is configured to set the exposure time value for image acquisition between each iterations.

The control unit is also in charge of adjusting the intensity of the illumination device, when necessary, according to the result of the step of checking the integrity of the light diffusor, once the set of tasks have been performed.

In some embodiment, the illumination device uses a laser as a light source in the illumination device.

In some embodiment, the system described previously is included in a driver monitoring system.

### DETAILED DESCRIPTION

Embodiments are illustrated by way of example, and not by way of limitation, and will be more fully understood with reference to the following detailed description when considered in connection with the figures in which:
- Figure 1 is a schematic top view of a system able to perform the method as disclosed in the present invention and embodied by a driver monitoring system placed inside the cabin of a vehicle and wherein the light diffusor has not been dislodged and/or impaired.
- Figure 2 represents part of the schematic top view from figure 1 but where the light diffusor has been dislodged and/or impaired.
- Figure 3 is a flow chart representing the different steps of the method as disclosed in the present invention.
- Figure 4 is another flow chart which details some specific sub-steps from the flow chart of figure 3.
- Figure 5 is a representation of an image recorded on the image sensor of the system presented in figure 1, when the illumination device is on.
- Figure 6 is a representation of an image recorded on the imaging device under similar conditions as for figure 5, but with the illumination device turned off.
- Figure 7 is a representation of an image obtained by computing the intensity difference between the two images from figure 5 and figure 6, with the illumination device on and off respectively, when the light diffusor is not impaired and not dislodged.
- Figure 8 shows the image from figure 7 once divided into blocks.
- Figure 9 shows two additional blocks from the image represented in figure 7.
- Figure 10 is a representation of the intensity difference image obtained when the light diffusor has been dislodged and/or impaired.
- Figure 11 represents the image from figure 10, once divided into blocks.
- Figure 12 shows two additional blocks from the image represented in figure 10.
- Figure 13 is a timing diagram illustration the switch between two different exposure time values, between repetitions of the method described in figure 2.

Generally speaking, the present disclosure provides a method and a device to assess if a system 2 is used under eye safety conditions for the user, by checking whether a light diffusor 26 placed in front of an illumination device 22 is impaired and/or missing by recording an appropriate set of images with an image sensor 20 and applying a processing algorithm to said images. The exemplary embodiments of the invention will be further described below in conjunction with the drawing and embodiments.

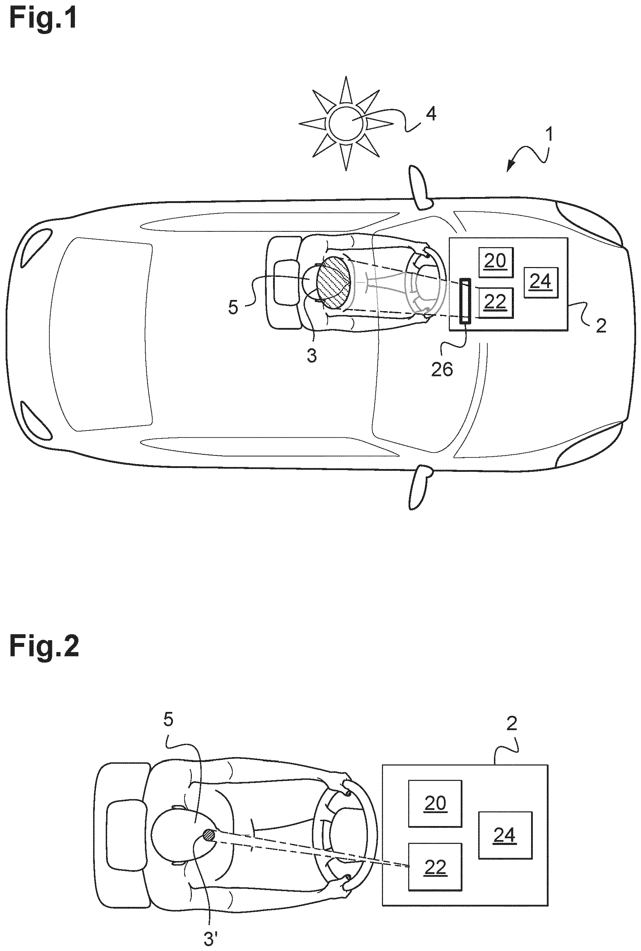

Figure 1 shows an example of embodiment for the present invention, where a system 2 is comprised of at least an illumination device 22, at least one image sensor 20 and a control unit 24 which controls and communicates with both aforementioned elements.

For instance, in a possible embodiment, the system 2 can be a driver monitoring system placed inside a vehicle 1 cabin, to oversee the behavior of the user, i.e., a driver 5. To do so, the driver monitoring system can be put in front of the driver, on either the right or left side of the cabin of the vehicle 1, depending on the driving side.

In another possible embodiment, the system 2 can be used to monitor the other occupants inside the cabin of the vehicle.

The illumination device 22 and the image sensor 20 are used respectively to illuminate and capture images of the user, which are then processed by the control unit 24 to gather behavioral data.

The illumination device 22 is used to illuminate a target area 3. In this embodiment, the target area 3 is located on the driver's face and upper torso region.

The illumination device 22 can be an infrared light source, such as a diode laser, a Vertical-Cavity surface-emitting laser, « VCSEL », or other non-laser type light sources.

The illumination device 22 usually involves light sources with small irradiation angle. A light diffusor 26 is placed in the optical path of the illumination device 22 in order to increase the irradiation angle and to spread the light emitted by the illumination device 22 across the whole target area 3, as homogeneously as possible in terms of intensity.

This target area 3 is at least partially included in the field of view of the image sensor 20.

When the light diffusor 26 is missing or impaired, as illustrated on Figure 2, only a localized spot 3' at the center of the original target area 3 is illuminated. In this localized spot 3', the irradiance value is very high, and the illumination intensity is not considered homogeneous across the whole target area 3 anymore.

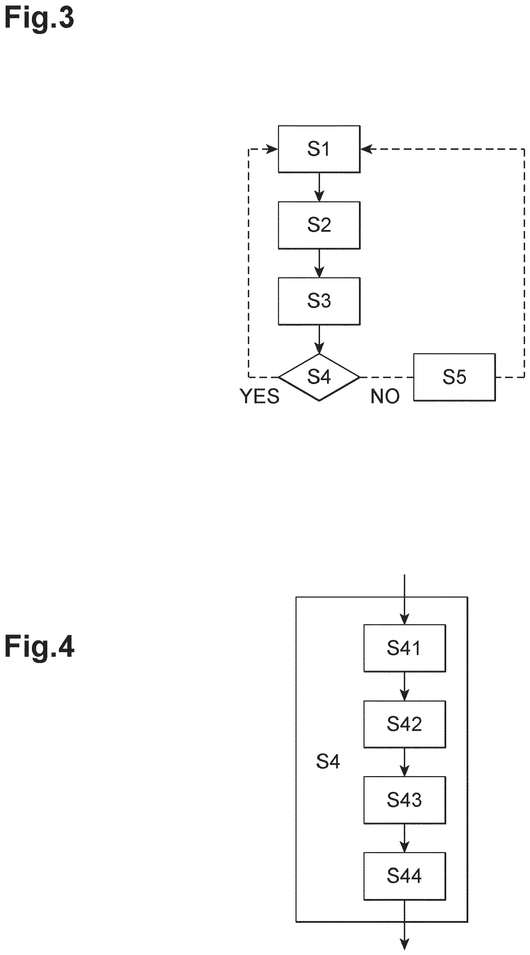

Checking the state of the light diffusor 26 can be performed by studying the illumination homogeneity across the target area 3 using an image processing method which include steps represented in the flow chart of Figure 3, and which are detailed below.

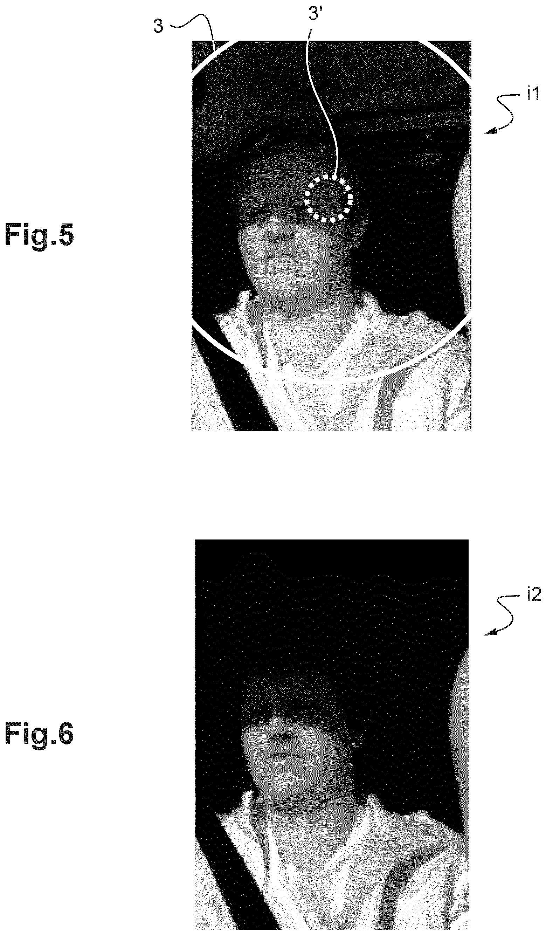

The method described in the flow chart of Figure 3 starts with a first step S1 wherein a first image i1 is recorded using the image sensor 20 while the illumination device 22 is on. Figure 5 is a schematic representation of such an image i1, obtained when the illumination device 22 is on and the light diffusor 26 is not impaired and is properly placed in the optical path between the illumination device 22 and the target area 3. The localized spot 3' situated at the center of the target area 3 is also represented on the image i1.

The exposure time is chosen accordingly to the image sensor 20 parameters, the intensity of the illumination device 22 and the expected distance between the illumination device 22 and the target area 3.

In the present embodiment of the invention, the exposure time can range between 0.1 µs and 1000 µs. Here, it is set to 460 µs, as the target area 3 is expected to be at least 25 cm away from the illumination device 22. It corresponds to the usual minimum distance between the driver 5 and the driver monitoring system considered in this example.

Here, in addition to the driver 5, the field of view of the image sensor 20 may also include a window area, which can be removed from the first image i1 by cropping the field of view of the image sensor 20. From now on, the cropped field of view of the image sensor 20 where the window area has been removed will simply be referred to as the field of view of the image sensor 20.

To further optimize image processing time, it is also possible to reduce the image size, for instance, by binning the pixels of the first image i1. It consists of combining adjacent pixels by averaging their value for instance, into single pixels. Here, an array of 16 pixels in a 4x4 binning can be merged into one single pixel, thus reducing the image size.

The image sensor records an intensity information based on the light of the illumination device 22 that is backscattered by the target area 3.

In the present embodiment of the invention, the intensity information is represented as a grayscale value, ranging from 0 to 255.

If a driver monitoring system as described by the current embodiment is considered, the light from the illumination device 22 can be backscattered by the driver's skin.

However, light sources from the surrounding environment 4 might be backscattered by the target area 3 as well.

For instance, in this embodiment, it can be light from the environment surrounding the vehicle 1, such as sunlight or light from streetlights, which passes through the windows and/or windshield, and is backscattered by the face of the driver 5 in the direction of the image sensor 20.

The first image i1 contains intensity information coming from both the illumination device 22 and from the surrounding environment 4. Light coming from the surrounding environment 4 poses an issue for the image processing, especially for properly checking if the light diffusor 26 is not impaired or missing, as it affects the intensity homogeneity across the target area 3.

To remove the unwanted contribution coming from the surrounding environment 4 while assessing if the system 2 operates under eye safety condition, the second step S2 of the disclosed method is to turn the illumination device 22 off, and to record a second image i2 using the image sensor 20, here, with the same exposure time as for the first image i1 for instance.

In this embodiment, the exposure time for the second can range between 0.1 µs and 1000 µs. Here, it is set to 460 µs, as the target area 3 is expected to be at least 25 cm away from the illumination device 22.

This second image i2 only contains intensity information coming from the surrounding environment 4.

As for the first image i1, the window area in the image sensor 20 field of view can be removed, if necessary, by cropping the second image i2. Here, both images have the same field of view.

To further optimize the image processing time, an additional step could be to reduce the size of the second image i2. As for the first image i1, this could be done by binning the pixels on the second image i2. Here, both the first image i1 and the second image i2 have the same size.

As for the first image i1, the intensity information recorded by the image sensor 20 is a grayscale value, ranging from 0 to 255 for instance.

The third step S3 of the method is to remove the surrounding environment 4 contribution from the first image i1 by subtracting the intensity information of the second image i2 from the aforementioned first image i1 intensity information. This intensity subtraction is done pixel by pixel.

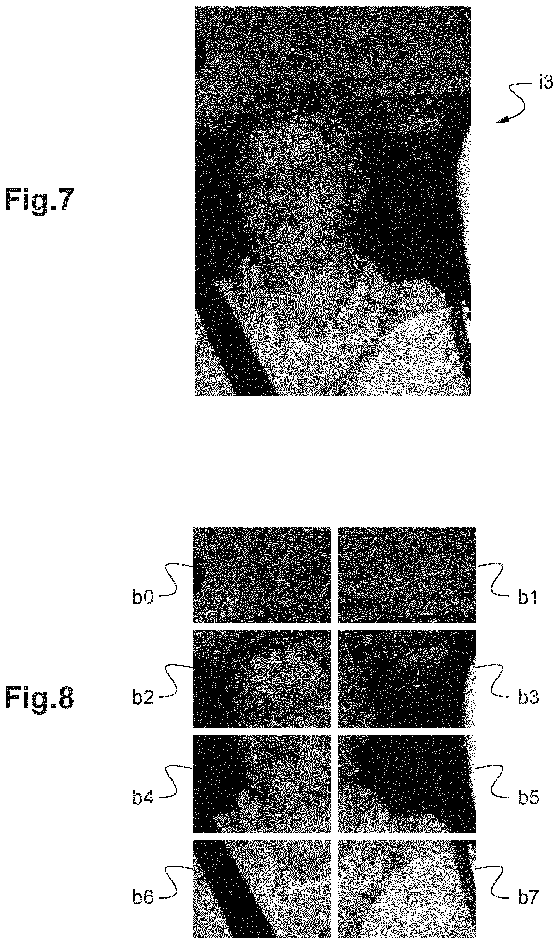

The third image i3 generated by computing the intensity difference is represented on Figure 7.

In order to reduce the noise in the generated third image i3, a blurring filter can be applied to the generated third image i3. For instance, a median filter can be used.

The third image i3 only contains intensity information coming from the illumination device 22 that is backscattered by the target area 3 and no contribution from the surrounding environment 4.

This third step S3 is performed by the control unit 24 of the system 2.

In this embodiment, the control unit 24 is part of the driver monitoring system. The control unit 24 can also be used to process behavioral information coming from the driver monitoring system.

The fourth step S4 of the method of figure 3 is to check the integrity of the light diffusor 26. This is done by evaluating the illumination homogeneity across the target area 3 on the generated third image i3.

If the light diffusor 26 is missing, as the light emitted by the illumination device 22 has a narrow irradiation angle, it results in only the center of the target area 3 being illuminated. Moreover, the irradiance value in this localized spot 3' is high, especially when compared to the rest of the target area 3, near the border for instance.

The intensity measured in this localized spot 3' at the center of the target area can be compared to the intensity from the border of the target area 3 using a dedicated algorithm. The sub-steps involved in the algorithm are detailed using a second flow chart represented in figure 4.

The first sub-step S41 consists in splitting the generated third image i3 into several sub-areas called blocks. The number of blocks and their size are predefined and chosen accordingly to the items supposed to be in the field of view of the image sensor 20.

A given region of the generated third image i3 can be part of several blocks, i.e., two neighboring blocks can partially overlap.

An example of a generated third image where some of the blocks are drawn is shown in figure 8. In this embodiment, each generated third image i3 is first divided into 4x2=8 rectangular blocks, with each block b0, b1, b2, b3, b4, b5, b6 and b7 being of the same size.

In another possible embodiment, the generated third image i3 could also be divided into 6x2=12 rectangular blocks of the same size.

On top of the 4x2 rectangular blocks b0, b1, b2, b3, b4, b5, b6 and b7, combination blocks b23, b45 are defined at the center of the image sensor 20 field of view.

Here, the combination blocks are of the same size as the other blocks b0, b1, b2, b3, b4, b5, b6 and b7, and are defined at the center of another pair of horizontally aligned blocks, with the exception of the pair of blocks at the top and the bottom edge of the field of view of the image sensor 20.

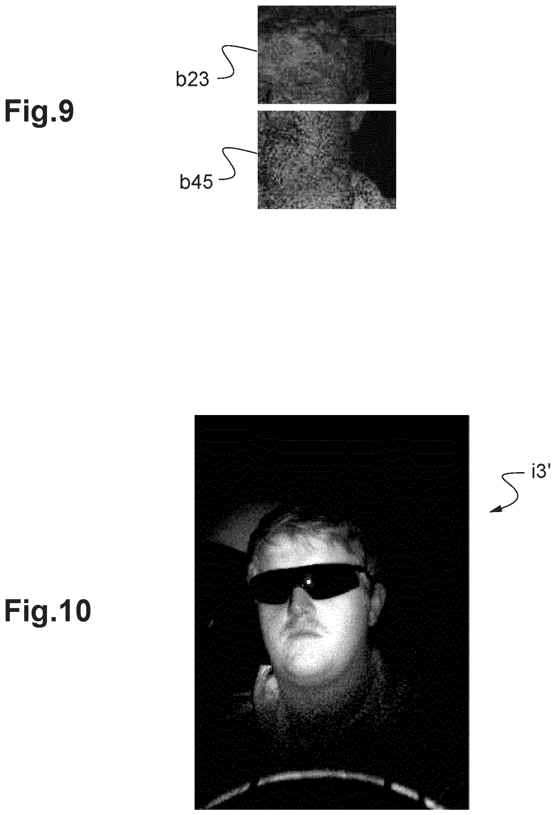

The combination blocks b23 and b45 defined on the generated image i3 are illustrated in the figure 9.

The second sub-step S42 is to assign a label to each block b0, b1, b2, b3, b4, b5, b6, b7, b23 and b45, depending on their position in the field of view of the image sensor 20. Two assignments are possible, either center, or border of the target area 3.

Here, the combination blocks b23 and b45 are assigned to the center of the target area 3, where the localized spot 3' might be located if the light diffusor 26 is missing or impaired.

Here, the remaining blocks b0, b1, b2, b3, b4, b5, b6 and b7 are assigned to the border of the target area 3.

The third sub-step S43 is to compute an intensity value for each of the labels, center or border.

In other words, the intensity information from all the sub-areas belonging to a label are considered, in order to compute a single intensity value for the label.

Different computation methods can be chosen to get an intensity value for each label.

For instance, in the present embodiment, the maximum intensity is computed by taking into account all the pixels from the blocks b23 and b45, both of which are labelled center of target area 3 where the localized spot 3' might be located. This maximum intensity value is defined as the intensity value for the center area and will be called I_center hereinafter.

In the present embodiment, the maximum intensity is a grayscale value ranging from 0 to 255.

An average intensity is retrieved by averaging the intensity value from all the pixels belonging to blocks b0, b1, b2, b3, b4, b5, b6, b7. These sets of blocks are assigned to the border of the target area 3. The average intensity value will be called I_border hereinafter and corresponds to the intensity value for the border of the target area 3.

In another possible embodiment, the average intensity could be used to retrieve an intensity value for each label.

These methods to compute an intensity value for each label are given as an example and are in no way limitative.

The fourth sub-step S44 of the algorithm of figure 3 is to compute the illumination ratio, which compares intensity value from different label, which corresponds to different regions of the target area 3.

In other words, this illumination ratio quantifies the homogeneity of the illumination across the target area.

For instance, the illumination ratio of the generated third image i3 can be computed as R = I_center / I_border.

Other formula to compute the illumination difference across the target area 3 are possible too and is not limited to the aforementioned formula.

The illumination ratio is compared to a set threshold value.

For instance, the threshold value can be set according to eye-safety standards in force, or according to experience.

Here, the illumination ratio in the generated third image i3 represented in figure 7 is below the threshold, the illumination intensity across the target area is homogenous, and confirms that the light diffusor 26 has not been impaired or damaged.

In another example, a first image has been acquired with the illumination device on, and while the light diffusor has been removed. A second image has been recorded while the illumination device is off, and a third image i3' has been generated by computing the difference between the first and second image. The generated third image i3' is shown in figure 10.

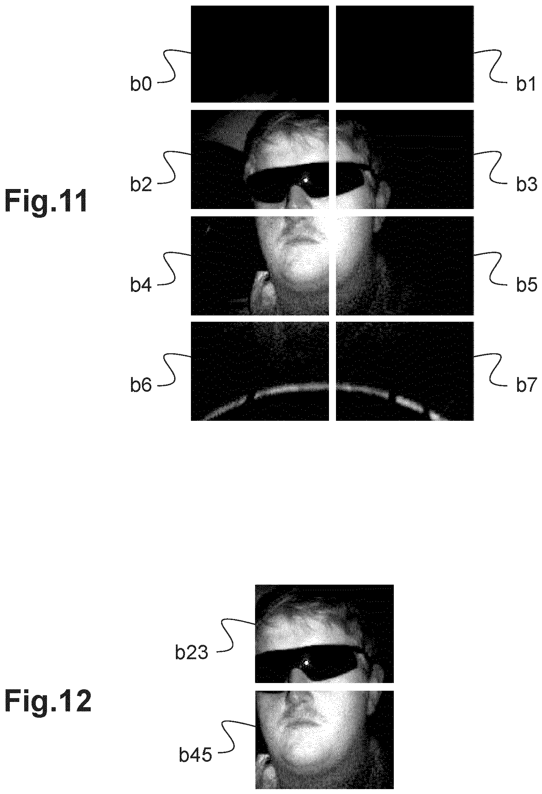

Figure 11 illustrates how the generated third image i3' is divided into blocks b0, b1 b2, b3, b4, b5, b6 and b7 during the first sub-step S41.

Figure 12 shows the center blocks b23 and b45 obtained for the generated third image i3' during the first sub-step S41.

In this second example, after applying the second sub-steps S42, the third sub-steps S43 and the fourth sub-steps S44 to the generated third image i3', the obtained illumination ratio would be above the threshold, as the illumination intensity across the target area 3 is not homogenous.

Here, the illumination intensity is concentrated in the localized spot 3', as expected when the light diffusor 26 is removed or impaired.

Depending on the result of the light diffusor 26 integrity check performed during the fourth step S4, it is assessed whether the system is operating under eye safety conditions.

Further image processing sub-steps could also be included in the algorithm.

If the light diffusor 26 has been impaired and/or dislodged, the system 2 is assessed to be unsafe.

An additional fifth step S5 in the method described in figure 3 could then be to adjust the illumination device 22 intensity.

In the present embodiment, the aforementioned adjustment of the illumination device 22 intensity can be to turn said light device 22 off.

In another example of embodiment, the illumination device 22 intensity can be lowered by the control unit 24, and a new eye safety assessment of the system 2 can be performed, starting from S1 of the disclosed method.

If the light diffusor 26 has not been impaired and/or dislodged, the system 2 is assessed to be operating under eye safety conditions, and the method can be repeated, starting at the first step S1, wherein a first image is recorded using the image sensor 20 while the illumination device 22 is on.

Continuously repeating the method described in this invention allows a continuous assessment of the eye safety condition. For instance, repetitions of the method can be run as long as the system 2 is on.

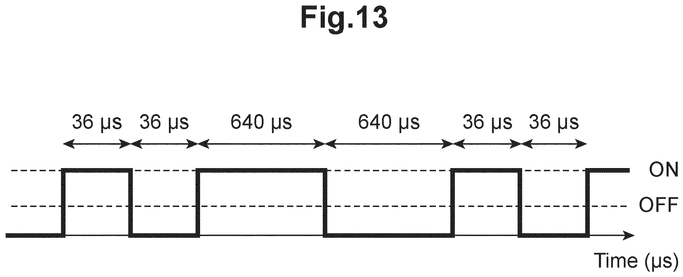

The exposure time of the image sensor 20 during S1 and S2 has been chosen according to the image sensor 20 parameters, the intensity of the illumination device 22 and the expected distance between the illumination device 22 and the target area 3. In order to be able to perform an eye safety assessment for target areas 3 at several ranges, the exposure time value of the image sensor 20 can be changed between each assessment, as illustrated in figure 13.

In this example of embodiment, the control unit 24 can switch the exposure time value on the image sensor 20 between each repetition of the method. Two exposure time are used, one after the other.

Here, the expected distance between the target area 3 and the illumination device 22 was set according to the normal driving position of the driver 5. In the case where the driver 5 gets closer to the illumination device 22, an assessment of the eye safety condition should also be made for a range shorter than 25 cm. Generally, as the target area 3 gets closer, more light from the illumination device 22 is backscattered, and the exposure time can be shorter.

In the embodiment illustrated in figure 13, a shorter exposure time of 36 µs for instance is first used during S1 and S2, to perform a rapid short-range eye-safety assessment, when the distance between the target area 3 and illumination device 22 is smaller than 25 cm, followed by a second assessment with an exposure time of 640 µs correspond to a distance above 25 cm between the target area 3 and illumination device 22. This allows an eye safety assessment for target area 3 closer than 25 cm, and further than 25 cm using the same system 2. More than two exposure time values could be used in other examples of embodiments, to access intermediate distance ranges.

## Claims

1. A method to assess the eye safety condition of an system (2) comprised of an illumination device (22), a light diffusor (26), and an image sensor (20), wherein the light diffusor (26) is placed in the optical path of the illumination device (22) to spread light emitted by said illumination device (22) across a target area (3) at least partially included in the field of view of the image sensor (20), the method being **characterized by** the following steps:
- (S1) Capturing a first image (i1) of the target area (3) using the image sensor (20) while the illumination device (22) is on.
- (S2) Capturing a second image (i2) of the target area (3) using the image sensor (20) while the illumination device (22) is off.
- (S3) Generating a third image (i3) by computing the intensity difference between the first (i1) and second (i2) images.
- (S4) Checking if the light diffusor (26) effectively spreads the light emitted by the illumination device (22) across the whole target area (3) by processing the third image (i3).

2. A method according to claim 1, wherein the step of checking if the light diffusor (26) effectively spreads the light emitted by the illumination device (26) across the whole target area (3) is done by evaluating the homogeneity of the illumination intensity across the target area on the third image (i3).

3. A method according to any of claims 1 to 2, wherein the step of checking if the light diffusors (26) effectively spreads the light emitted by the illumination device (22) across the whole the target area (3) is done by splitting said target area (3) into a center and a border, and comparing the intensity information from the border of the target area (3) to the intensity of a localized spot (3') at the center of said target area (3).

4. A method according to any of claims 1 to 3 wherein the step of checking if the light diffusor (26) effectively spreads the light emitted by the illumination device (22) across the whole target are (3) is done according to an algorithm, comprising the following steps:
- (S41) Defining several sub-areas (b0, b1, b2, b3, b4, b5, b6, b7) on the generated third image (i3),
- (S42) Giving each sub-area (b0, b1, b2, b3, b4, b5, b6, b7) of the generated third image (i3) a label according to their position on the image sensor (20) field of view,
- (S43) Computing an intensity value for each label, by considering all sub-areas contained in said label.
- (S44) Comparing the intensity difference value to a threshold.

5. A method according to any of the claims 1 to 4, wherein if the system (2) does not satisfy the eye safety condition, the intensity of the illumination device (22) is adjusted.

6. A method according to any of the claims 1 to 5, wherein if the system (2) does satisfy the eye safety condition, the whole method is repeated, step by step, each repetition going from (S1) up to (S4).

7. A method according to claim 6, wherein a first exposure time value is used on the image sensor (20) when capturing both the first image (i1) and second image (i2), and wherein a second exposure time value, distinct from the first exposure time value, is then used when capturing both the first image (i1) and second image (i2) in a new repetition of the method.

8. A system (2) including an illumination device (22), an image sensor (20), a light diffusor (26) and a control unit (24), said control unit being configured to perform a set of tasks, including:
- Toggling the illumination device (22) on and off between each capture of the image sensor(20)
- Triggering the acquisitions on the image sensor (20) to capture a first image (i1) once the illumination device (22) has been turned on, and to capture a second image (i2) once the illumination device (22) has been turned off,
- Computing a third image (i3) based on the intensity difference between the first image (i1) and the second image (i2)
- Checking the integrity of the light diffusor (26) by processing the third image (i3).

9. A system (2) according to claim 8 wherein the control unit (24) is configured to run iterations of the set of tasks.

10. A system (2) according to claim 9 wherein the control unit (24) is configured to set the exposure time value for image acquisition between each iterations.

11. A system (2) according to any of claims 8 to 10 wherein the control unit (24) is configured to adjust the intensity of the illumination device (22) after the set of tasks has been performed, according to the result of the step of checking the integrity of the light diffusor (26).

12. A system (2) according to any of claims 8 to 11, wherein the light source in the illumination device (22) is a laser.

13. A driver monitoring system which includes a system (2) as claimed in any of claims 8 to 12.
